Europäisches Patentamt

European Patent Office

Office européen des brevets

(19)

(11) Veröffentlichungsnummer: **0 091 083**
**A2**

(12) **EUROPÄISCHE PATENTANMELDUNG**

(21) Anmeldenummer: 83103139.8

(22) Anmeldetag: 30.03.83

(51) Int. Cl.³: **F 16 H 5/40**

(30) Priorität: 01.04.82 US 364288

(43) Veröffentlichungstag der Anmeldung:
12.10.83 Patentblatt 83/41

(84) Benannte Vertragsstaaten:
AT BE DE FR GB IT NL SE

(71) Anmelder: DEERE & COMPANY
1 John Deere Road
Moline Illinois 61265(US)

(72) Erfinder: Ahlschwede, Brian Alvin
4827 Edgebrook
Waterloo Iowa 50701(US)

(72) Erfinder: McKee, Kevin Douglas
1103 Latern Square Apt. 5
Waterloo Iowa 50701(US)

(74) Vertreter: Feldmann, Bernhard
DEERE & COMPANY European Office, Patent
Department Steubenstrasse 36-42 Postfach 503
D-6800 Mannheim 1(DE)

(54) Getriebesteuereinrichtung für Fahrzeuge.

(57) Über einen Handschalthebel (40) hydraulisch betätigbares Mehrganggetriebe (16) mit einer elektronischen Steuereinheit, die in Abhängigkeit von Eingangsimpulsen das Mehrganggetriebe (16) automatisch schaltet. Die automatische Schaltung kann manuell übersteuert werden, wobei zumindest die Verbindung von Handschalthebel zu dem das Mehrganggetriebe schaltenden Ventilsatz mechanischer Art ist.

EP 0 091 083 A2

## Getriebesteuereinrichtung für Fahrzeuge

Die Erfindung bezieht sich auf eine Getriebesteuereinrichtung für Fahrzeuge mit einem Servogerät zum Betätigen eines Mehrganggetriebes, einem Schalthebel zum Verstellen des Servogerätes und einer elektronischen Steuereinheit, die in Abhängigkeit von ermittelten Funktionen Ausgangssignale zum Verstellen des Servogerätes liefert.

Eine derartige Getriebesteuereinrichtung ist aus der DE-OS 2 756 719 bekannt.

In vielen automatisch und/oder elektronisch gesteuerten Getrieben wird ein mechanisches, von der Bedienungsperson durch Verstellen des Schalthebels ausgelöstes Signal in ein elektrisches umgewandelt und mittels einer elektronischen Steuereinheit an ein magnetspulenbetätigbares Ventil zum Auslösen des Schaltvorganges im Getriebe geleitet. Derartige Einrichtungen können beim Auftreten von Fehlern in dem elektrischen oder elektronischen System aber zu Beeinträchtigungen der automatischen oder manuellen Steuerung des Getriebes führen.

Die mit der Erfindung zu lösende Aufgabe wird darin gesehen, daß beim Auftreten von Fehlern im elektrischen und oder elektronischen System die manuelle Steuerung des Getriebes nicht beeinträchtigt wird.

Diese Aufgabe ist gemäß der Erfindung dadurch gelöst worden, daß ein Motor vorgesehen ist, der in Abhängigkeit von den Ausgangssignalen betätigt wird und mechanisch an das Servogerät angeschlossen ist, mit dem auch der Schalthebel mechanisch verbunden ist. Auf diese Weise wird der Stellweg des Schalthebels bei seiner Betätigung mechanisch auf das Servogerät, das als Ventil ausgebildet sein kann, übertragen, so daß bei Ausfällen im elektrischen und/oder elektronischen System eine Handsteuerung des Getriebes stets möglich ist. Hinzu kommt, daß auch die Ausgangssignale der elektronischen Steuereinheit in eine mechanische Bewegung umgeformt werden, wodurch weitere mögliche Fehlerquellen im elektrischen bzw. elektronischen System ausgeschaltet werden konnten.

Dadurch, daß die mechanischen, den Motor an das Servogerät anschließenden Mittel und die mechanischen, den Schalthebel mit dem Servogerät verbindenden Mittel bei betätigtem Motor den Schalthebel verstellen, wird erreicht, daß die Bedienungsperson bereits aus der Stellung des Schalthebels schließen kann, daß eine automatische Betätigung des Getriebes stattgefunden hat, wobei sich gleichfalls die automatische Betätigung übersteuern läßt.

Zweckmäßig kann nach der Erfindung das Servogerät ein Drehschieberventil aufweisen, das mit auf das Getriebe einwirkenden, pilotgesteuerten Ventilen verbunden ist, wobei die den Schalthebel mit dem Servogerät verbindenden Mittel und/oder die den Motor an das Servogerät anschließenden Mittel an einen Drehzahlleser angeschlossen sind und diesen betätigen, wobei der Drehzahlleser Ausgangssignale an die elektronische Steuereinheit liefert.

Was die mechanischen Mittel im einzelnen anbelangt, so können die mechanischen, den Schalthebel mit dem Servogerät verbindenden Mittel eine Welle zur drehfesten Aufnahme eines Zahnrades aufweisen, das mit einem Zahnrad des Servogerätes kämmt, sowie einen an der Welle fest angeordneten Arm, der anderenends mit dem Schalthebel verbunden ist, wobei die mechanischen, den Motor an das Servogerät anschließenden Mittel eine Welle zur drehfesten Aufnahme von zwei Zahnrädern aufweisen, von denen eines mit einem Zahnrad des Servogerätes und das andere über einen Drehmomentvervielfältiger mit einem Zahnrad am Motor verbunden ist.

Bei einer zusammengefaßten Bauweise der mechanischen Mittel werden gemeinsame Bauteile dadurch verwendet, daß die mechanischen, den Schalthebel mit dem Servogerät verbindenden und den Motor an das Servogerät anschließenden Mittel eine Welle zur drehfesten Aufnahme von zwei Zahnrädern aufweisen, von denen eines mit einem Zahnrad des Servogerätes und das andere über einen Drehmomentvervielfältiger mit einem Zahnrad am Motor verbunden ist, wobei an der Welle ein Arm mit seinem einen Ende fest angeordnet ist, der anderenends mit dem Schalthebel verbunden ist.

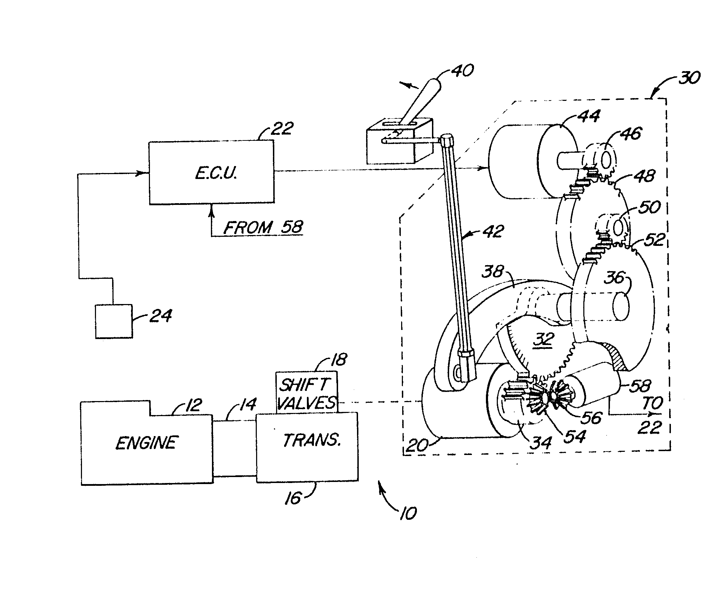

In der Zeichnung ist eine Getriebesteuereinrichtung nach der Erfindung in schematischer und teilweise perspektivischer Darstellung wiedergegeben.

Im einzelnen ist in der Zeichnung mit 10 eine Getriebesteuereinrichtung bezeichnet. Zu ihr gehört ein Verbrennungsmotor 12 wie ein Dieselmotor, eine herkömmliche, durch Muskelkraft betätigbare Kupplung 14 und ein als Mehrganggetriebe ausgebildetes Schaltgetriebe 16, wie es in der europäischen Patentanmeldung 81102161 mit der Veröffentlichungsnummer 0 036 656 oder in der US-PS 4 004 473 beschrieben ist. Das Schaltgetriebe 16 wird über ein Servogerät oder einen Ventilsatz 18 betätigt und letzterer wiederum über ein Drehschieberpilotventil 20, das aber auch gleichermaßen als Linearpilotventil ausgebildet sein kann. Jedenfalls ist es mit Schaltstellungen für die einzelnen Übersetzungsverhältnisse im Schaltgetriebe 16 versehen. Des weiteren ist eine elektronische Steuereinheit 22 vorgesehen, die von einem oder mehreren Sensoren 24 Signale empfängt, die ihrerseits einem oder mehreren Fahrdaten entsprechen. So könnte der Sensor 24 beispielsweise die Motordrehzahl ermitteln, wie es in der US-PS 4 208 925 beschrieben ist. Zusätzlich empfängt die elektronische Steuereinheit 22 aber noch ein Übersetzungsverhältnissignal GR, das das tatsächliche Übersetzungsverhältnis des Schaltgetriebes 16 aus einem Überbrückungsmechanismus 30 wiedergibt, und liefert als Folge der Eingangssignale Getriebefunktionssignale TC. Die elektronische Steuereinheit 22 aber wie auch das Drehschieberpilotventil 20 oder der Ventilsatz 18 sind nicht Gegenstand der vorliegenden Erfindung, sondern nur des besseren Verständnisses wegen erwähnt, um darlegen zu können, wie der Überbrückungsmechanismus eingesetzt werden kann. So könnte der Überbrückungsmechanismus auch bei der in der US-PS 4 208 925 beschriebenen elektronischen Steuereinheit und Getriebesteuereinrichtung dadurch Verwendung finden, daß die dort geschilderten "auf" und "ab" Signale in Signale umgewandelt würden, die die Drehung im oder entgegen dem Uhrzeigerdrehsinn eines Schrittschaltmotors 44 in Abhängigkeit davon, ob das Getriebe herauf- oder heruntergeschaltet wird, bewirkten.

Im einzelnen weist der Überbrückungsmechanismus 30 ein Segmentrad 32 auf, das mit einem am Drehschieberpilotventil 20 angeordneten Eingangszahnrad 34 kämmt und drehfest auf einer Welle 36 aufsitzt. Mit letzterer ist das eine Ende eines Armes 38 fest verbunden, dessen anderes Ende an einen manuell betätigbaren Schalthebel 40 über ein Gestänge 42 angreift.

Der bereits erwähnte, im Handel erhältliche Schrittschaltmotor 44 (beispielsweise ein Warner Brake and Clutch, Typ No. 072-0060-RA) treibt ein Ausgangszahnrad 46 in Abhängigkeit von den von der elektronischen Steuereinheit 22 abgegebenen Getriebefunktionssignalen TC an. Und das Ausgangszahnrad 46 wiederum ist mit der Welle 36 über Untersetzungs- und Momentvervielfachräder 48, 50, 52 verbunden.

Wie ferner aus der Zeichnung hervorgeht, kämmt ein unter Umständen mit dem Eingangszahnrad 34 des Drehschieberpilotventils 20 fest in Verbindung stehendes Kegelrad 54 mit einem Kegelrad 56, das seinerseits auf der Eingangswelle eines Drehzahllesers 58 angeordnet ist. Letzterer kann als Drehpotentiometer ausgebildet oder auch mit einer Vielzahl nockenbetätigbarer Schalter versehen sein, die, je nachdem ob sie geöffnet oder geschlossen sind, die Winkelstellung des Drehschieberpilotventils 20 und somit das tatsächliche Übersetzungsverhältnis im Schaltgetriebe anzeigen. Der Drehpotentiometer erzeugt das Übersetzungsverhältnissig-nal GR, das wiederum von der elektronischen Steuereinheit 22 empfangen wird und zu einer in der Zeichnung der Einfachheit halber nicht dargestellten Ganganzeige, beispielsweise digitaler Art und im Fahrerhausinneren gelegen, weitergeleitet werden kann.

Es wird gesondert darauf hingewiesen, daß durch den vorstehend erläuterten Überbrückungsmechanismus sowohl der Schrittschaltmotor 44 als auch der Schalthebel 40 mit dem Eingangszahnrad 34 in einer positiven, mechanischen und parallel geschalteten Verbindung stehen. Das hat den Vorteil, daß selbst wenn die Getriebefunktionssignale TC den Schrittschaltmotor 40 veranlassen würden, das Schaltgetriebe 16 hochzuschalten, die Bedienungsperson durch manuelles Betätigen des Schalthebels 40 diesen Befehl übersteuern könnte. Andererseits kann das Schaltgetriebe 16 auch selbstverständlich von Hand durch Betätigung des Schalthebels 40 geschaltet werden, wenn die elektronische Steuereinheit 22 oder der Schrittschaltmotor 44 ausgefallen sein sollten. Bei Handbetätigung läuft, wenn der Schalthebel 40 bewegt wird, der Schrittschaltmotor 44 frei um, so daß dann keine Kupplung zum Abschalten des Schrittschaltmotors erforderlich ist. Wird aber das Schaltgetriebe 16 selbsttätig durch den Schrittschaltmotor 44 geschaltet, so wird die Schaltbewegung sich in einem entsprechenden Verstellen des Schalthebels 40 bemerkbar machen.

Patentansprüche

1. Getriebesteuereinrichtung für Fahrzeuge mit einem Servogerät zum Betätigen eines Mehrganggetriebes, einem Schalthebel zum Verstellen des Servogerätes und einer elektronischen Steuereinheit, die in Anhängigkeit von ermittelten Funktionen Ausgangssignale zum Verstellen des Servogerätes liefert, dadurch gekennzeichnet, daß ein Motor (44) vorgesehen ist, der in Abhängigkeit von den Ausgangssignalen betätigt wird und mechanisch an das Servogerät (18, 20) angeschlossen ist, mit dem auch der Schalthebel (40) mechanisch verbunden ist.

2. Getriebesteuereinrichtung nach Anspruch 1, dadurch gekennzeichnet, daß die mechanischen, den Motor (44) an das Servogerät (18, 20) anschließenden Mittel (46, 48, 50, 52, 36, 32) und die mechanischen, den Schalthebel (40) mit dem Servogerät (18, 20) verbindenden Mittel (42, 38, 32) bei betätigtem Motor (44) den Schalthebel (40) verstellen.

3. Getriebesteuereinrichtung nach Anspruch 1 oder 2, dadurch gekennzeichnet, daß das Servogerät (18, 20) ein Drehschieberventil (22) aufweist, das mit auf das Getriebe (16) einwirkenden pilotgesteuerten Ventilen verbunden ist.

4. Getriebesteuereinrichtung nach Anspruch 2, dadurch gekennzeichnet, daß die den Schalthebel (40) mit dem Servogerät (18, 20) verbindenden Mittel (42, 38, 32) und/oder die den Motor (44) an das Servogerät (18, 20) anschließenden Mittel (46, 48, 50, 52, 36, 32) an einen Drehzahlleser (58) angeschlossen sind und diesen betätigen, wobei der Drehzahlleser Ausgangssignale an die elektronische Steuereinheit (22) liefert.

5. Getriebesteuereinrichtung nach einem oder mehreren der vorherigen Ansprüche, dadurch gekennzeichnet, daß die mechanischen, den Schalthebel (40) mit dem Servogerät (18, 20) verbindenden Mittel (42, 38, 32) eine Welle (36) zur drehfesten Aufnahme eines Zahnrades (32) aufweisen, das mit einem Zahnrad (34) des Servogerätes (18, 20) kämmt, sowie einen an der Welle (36) fest angeordneten Arm (38), der anderenends mit dem Schalthebel (40) verbunden ist.

6. Getriebesteuereinrichtung nach einem oder mehreren der vorherigen Ansprüche, dadurch gekennzeichnet, daß die mechanischen, den Motor (44) an das Servogerät (18, 20) anschließenden Mittel (46, 48, 50, 52, 36, 32) eine Welle (36) zur drehfesten Aufnahme von zwei Zahnrädern (32, 52) aufweisen, von denen eines mit einem Zahnrad (34) des Servogerätes (18, 20) und das andere über einen Drehmomentvervielfältiger (50, 48) mit einem Zahnrad (46) am Motor (44) verbunden ist.

7. Getriebesteuereinrichtung nach einem oder mehreren der vorherigen Ansprüche, dadurch gekennzeichnet, daß die mechanischen, den Schalthebel (40) mit dem Servogerät (18, 20) verbindenden und den Motor (44) an das Servogerät (18, 20) anschließenden Mittel (42, 38, 32 und 46, 48, 50, 52, 36, 38) eine Welle (36) zur drehfesten Aufnahme von zwei Zahnrädern (32, 52) aufweisen, von denen eines mit einem Zahnrad (34) des Servogerätes (18, 20) und das andere über einen Drehmomentvervielfältiger (50, 48) mit einem Zahnrad (46) am Motor (44) verbunden ist, wobei an der Welle (36) ein Arm (38) mit seinem einen Ende fest angeordnet ist, der anderenends mit dem Schalthebel (40) verbunden ist.

E.C.U. 22

FROM 58

24

SHIFT VALVES 18

ENGINE 12

14

TRANS. 16

10

40

30

44

46

48

50

52

42

38

36

32

58

TO 22

56

20

34

54

1/1

0091083